(19)

Europäisches
Patentamt
European
Patent Office
Office européen
des brevets

(11) **EP 2 640 679 B1**

(12) **EUROPEAN PATENT SPECIFICATION**

(45) Date of publication and mention
of the grant of the patent:
**13.06.2018 Bulletin 2018/24**

(21) Application number: **11793854.8**

(22) Date of filing: **17.11.2011**

(51) Int Cl.:
*C05F 1/00* *(2006.01)*        *C05G 3/00* *(2006.01)*
*C05G 3/04* *(2006.01)*

(86) International application number:
**PCT/GB2011/052243**

(87) International publication number:
**WO 2012/066333 (24.05.2012 Gazette 2012/21)**

(54) **PROCESSING METHOD FOR BIOLOGICAL MATERIAL TO PRODUCE A WATER-RETAINING POLYMER COMPLEX**

VERARBEITUNGSVERFAHREN FÜR BIOLOGISCHES MATERIAL ZUR HERSTELLUNG EINES WASSERSPEICHERNDEN POLYMERKOMPLEXES

PROCÉDÉ PERMETTANT DE TRANSFORMER UN MATÉRIAU BIOLOGIQUE EN COMPLEXE DE TYPE POLYMÈRE RÉTENTEUR D'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.11.2010   GB 201019417**

(43) Date of publication of application:
**25.09.2013   Bulletin 2013/39**

(73) Proprietor: **Incinerator Replacement Technology Limited**
**Ipswich, Suffolk IP3 0DL (GB)**

(72) Inventors:
• **GHAREGHANI, Arjomand, Mohammadi**
**Hertfordshire AL10 9AB (GB)**
• **MORRIS-WATSON, Michael**
**Woodbridge**
**IP13 0AY (GB)**

(74) Representative: **Wilson, Peter David George et al**
**Novagraaf UK**
**Centrum**
**Norwich Research Park**
**Colney Lane**
**Norwich NR4 7UG (GB)**

(56) References cited:
| | |
|---|---|
| EP-A2- 1 035 092 | WO-A1-85/03927 |
| WO-A1-98/50319 | WO-A1-03/000621 |
| WO-A1-2005/059023 | WO-A1-2009/092127 |
| WO-A1-2010/045687 | WO-A2-2009/059775 |
| DE-A1- 10 123 255 | US-A- 3 976 465 |
| US-A- 4 201 564 | US-A- 5 268 105 |
| US-A1- 2003 030 168 | US-A1- 2008 314 828 |

**Description**

Field of the Invention

The invention relates to the processing of biological material.

Background to the Invention

Following the Bovine Spongiform Encephalopathy (BSE) breakout in the 1980's, and the subsequent banning of the use of Meat and Bone Meal (MBM) in animal feed, there have been many attempts to make a useful end-product out of fallen stock. In Europe, some MBM is used as ingredients in pet-food. In addition, MBM is increasingly used as an environmentally sustainable replacement for coal for renewable energy generation or as a fuel in cement kilns. However, MBM has only around two thirds the energy value of fossil fuels such as coal. Therefore, unfortunately, a large proportion of MBM is simply put in land fill or incinerated. DE 101 23 255 A1 and US 4 201 564 A disclose the alkaline digestion of biological matter and the use of the thus obtained material as fertiliser.

WO 2009/059775 A2 discloses the use of a super absorbent polymer to apply a fertilizer to a soil. The present inventors have looked to bridge the fields of MBM disposal/use and soil conditioning/fertilizing. Conventional inorganic fertilizers have the great disadvantage of being highly water soluble. This can lead to leaching of such fertilizer to ground water and which can cause significant environmental damages such as eutrophication. Organic fertilizers have their own problems, such as variable consistency. Much organic matter, especially meat, is not suitable as a fertiliser because it, for example, releases malodor (sometimes unbearable).

It is an object of the present invention to provide a solution to these problems.

Summary of the Invention

The inventors provide a method of processing biological material comprising dead animal or human proteinaceous material into a water-retaining polymer complex, said method comprising the steps of: (a) providing a composition comprising said biological material, an alkaline solution and a monomer that polymerises to form a water-retaining polymer; and

(b) adding a polymerisation agent to form a water-retaining polymer complex in which said animal or human proteinaceous material is chemically cross-linked to said water-retaining polymer;

wherein the ratio of biological material to other components is between 1:100 and 5:1 (w/v); and said monomer is alkene-based, such as acrylic acid, acrylamide or vinyl alcohol. In preferred embodiments the biological material is derived from an animal and/or said alkaline solution is provided at a temperature of 50°C or more.

In preferred embodiments the method further comprises one or both of the steps of drying the resultant water-retaining polymer complex and comminuting the resultant water-retaining polymer complex (preferably using cryogenic milling).

In preferred embodiments the composition further comprises a further nutrient and/or an animal repellent.

In preferred embodiments the composition further comprises comminuted disposable diaper, and preferably soiled diaper. Disposable diapers (or "nappies") comprise an assembly containing cellulosic material and often incorporate a water-absorbing gel, known as a "superabsorber" or suberabsorbent gel. Such superabsorbent-containing diapers are especially preferred. The disposal of such diapers, and especially if they are soiled with faecal matter, is problematic. The inventors have found that they may be added, in a comminuted state, to the composition before polymerisation. The alkaline nature of the composition acts to break down the structure of the cellulosic material, and also leads to reduction or elimination of pathogenic organisms that might be associated with the diaper material. Where superabsorbent polymer material is already present in the diaper, then this gives additional water holding capacity to the water-retaining polymer complex.

Preferably, any one of the above methods further comprises the step of comminuting the biological material prior to step (a), preferably wherein the method further comprises the step of freezing said biological material prior to said comminuting step (preferably using cryogenic freezing).

The inventors also provide a water-retaining polymer complex obtained from any one of the methods above, and the use of said water-retaining polymer complex to improve the water retention and/or nutrient content of soil.

Brief Description of the Drawings

The invention will be described with reference to the accompanying drawing, in which:

Figure 1 shows CFU/g of four environmentally important bacteria and Total Viable Count (TVC) in organic waste (minced meat) at three different time points during the process of the invention: prior to (To - shown in black fill) and after KOH addition ($T_{KOH}$ - shown in white fill) and after acrylic acid addition ($T_{aa}$ - shown in hatched fill). (CFU = colony-forming units); and

Figure 2 shows a number of Infrared (IR) spectra to provide evidence of cross-linking between meat and polyacrylate.

Detailed description of Preferred Embodiments

The invention concerns the processing of biological material, which is dead animal or human Proteinaceous material, or a mixture of these materials. The biological material is proteinaceous (i.e. comprises or consists essentially of protein), preferably comprising fibrous protein (such as, for example, meat). In particularly preferred embodiments, the biological material is derived from an animal, is preferably animal tissue, and preferably comprises fibrous protein (preferably comprising or consisting essentially of animal meat).

The claimed processing method converts biological material into a water-retaining polymer complex that, for example, aids the handling, transport and disposal of such material (e.g. biological waste). In preferred embodiments the method substantially reduces or essentially eradicates pathogens from within the biological material. The method therefore provides a safe means by which dead humans or animals (or parts thereof) can be disposed, especially in the case where said humans or animals are infected with a pathogenic agent (such as a prion, a virus, a bacterium or a fungus). The method is particularly useful in the setting of agriculture and food processing, where fallen stock (culled stock that is unfit for human consumption due to e.g. injury or infection) or unwanted animal body parts (e.g. from an abattoir, slaughterhouse, butcher or restaurant) need to be quickly and safely disposed of. Particular stock animals envisaged include chicken, turkey, goose, duck, pheasant, pig, cow, sheep, goat and horse.

Furthermore, the claimed method can be used to process biological material comprised within household waste, especially that derived from meat, vegetables and fruit.

The claimed method is self-heated and hence environmentally friendly. In addition, the complex produced according to the claimed method can be used to improve the properties of soil e.g. as a conditioner and/or fertilizer (though this use may be restricted to cases where the biological material has not been derived from a human). In this way waste material e.g. from fallen stock can be put to constructive use. Indeed, the water-retaining polymer complex of the invention provides a number of particular advantages in relation to conventional materials for soil improvement, as discussed in detail below.

*The method of the invention*

The claimed method involves providing a composition comprising the biological material to be processed, an alkaline solution and a suitable monomer. The alkaline solution might be, for example, a hydroxide-based solution (e.g. KOH, NaOH or $NH_4OH$). A typical concentration would be e.g. about 30% but concentrations also contemplated are those in the range 5-95%, preferably 5-75%, more preferably 10-50%, and most preferably 20-40%. A solution comprising $NH_4OH$ is preferred if increasing the nitrogen content of the polymer complex is important. A solution comprising KOH is preferred if increasing the potassium content of the polymer complex is important. Such increases may be important for providing a desired N:P:K ratio for a fertilizer. Otherwise, a combination of KOH and NaOH provides a particularly good water-retention (especially in a ratio of about 5:1).

Biological material is included in the composition at ratio between 1:100 and 5:1, preferably between 1:50 and 5:1, more preferably between 1:20 and 2:1, more preferably between 1:10 and 2:1, more preferably between 1:2 and 2:1.

A suitable monomer is any monomer that polymerises to form a water-retaining polymer and are alkene-based such as acrylic acid, acrylamide or vinyl alcohol, but the skilled addresse could identify other alternatives e.g. ethylene oxide. In preferred embodiments only a single type of monomer is used in order to simplify the procedure. The ratio of monomer to biological material can be selected according to the identity of both entities, though for guidance suitable ratios (w/v) for e.g. minced meat to acrylic acid are from 100:1 to 1:2, more preferably from 50:1 to 2:3, more preferably from 10:1 to 1:1, more preferably from 10:1 to 2:1, most preferably about 10:3.

In preferred embodiments the biological material is combined with the alkaline solution before the monomer is added. The alkaline conditions of the solution provide an antimicrobial effect, and this effect is potentiated at elevated temperature, e.g. at 40°C or more, preferably at 50°C or more, more preferably at 60°C or more. This elevated temperature can be obtained by direct heating of the solution but more preferably it is provided by the preparation of the alkaline solution just prior to the addition of the biological material - such preparation is exothermic and can raise water temperature e.g. from 23°C to 60°C. If an elevated temperature is to be maintained after combination with the biological material, exogenous heat may need to be supplied depending on the ratio and temperature of biological material combined with the alkaline solution. The subsequent combination with the monomer may also be exothermic and thus can contribute to the antimicrobial effect of the method (especially with acidic monomers). The composition may further comprise a cross-linking agent, such as ethylene glycol diacrylate, di(ethylene glycol) diacrylate, tetra(ethylene glycol) diacrylate, ethylene glycol dimethacrylate, di(ethylene glycol) dimethacrylate, tri(ethylene glycol) dimethacrylate, *N,N'*-Methylenebisacrylamide, *N,N'*- (1,2-dihydroxyethylene) bisacrylamide, divinylbenzene or N-(1-hydroxy-2,2-dimethoxyethyl) acrylamide. These agents are typically used at 0.01% and serve to cross-link the biopolymers in the biological material. It is expected that the use of such cross-linking agents will increase the water holding capacity of the polymer complex by 10-20%.

In preferred embodiments the composition further comprises a further nutrient, that is any substance of nutritional value to a plant that does not derive from the biological material to be processed. The further nutrient may be organic or inorganic, the latter including a source of nitrogen, phosphorous and/or potassium (e.g. ammonium phosphate).

In preferred embodiments the composition further comprises an animal repellent, especially a chemical repellent, such as grape musk, methyl anthranilate or ortho-aminoacetophenone.

The claimed method then involves adding a polymerisation agent to the composition described above (or vice-versa) to form a water-retaining polymer complex. The skilled addresse will be able to select a suitable polymerisation agent (and amount thereof), depending on e.g. the monomer used. For example, when using acrylic acid as the monomer, suitable agents include ammonium persulphate and tetramethylethylenediamine (TEMED) (e.g. 0.5g or 0.3g, respectively, for a mix formed from 100ml 30% alakaline solution, 100g minced meat and 30ml acrylic acid).

In preferred embodiments, the method of the invention further comprises the step of drying the resultant water-retaining polymer complex and/or comminuting said complex, preferably wherein said comminuting is effected using cryogenic milling, for example using liquid nitrogen. Comminuting of the polymer complex breaks it down into polymer complex particles that are smaller in size and larger in surface area. This can aid handling, disposal or distribution of the polymer complex, and is especially useful when the complex is to be dispersed onto fields (where the increased surface area promotes water-retention and eventual nutrient release).

*The resultant water-retaining polymer complex and its uses*

The method of the invention can process biological material into a complex that can be substantially free of viable pathogenic agents, such as prions (e.g. that which causes BSE and scrapie), viruses, bacteria (e.g. *B.cereus, S.aureus, S.typhimurium* and *E.coli)* and/or fungi. It thus enables the conversion of biological material into a form that is easier and safer to handle, transport and dispose of.

In addition, however, the complex produced by the method of the invention has properties that enable it to be used in agriculture. For example, the complex has surprisingly high water-retaining capacity, making it suitable for improving the water retention of soil (often referred to as "conditioning" soil).

Furthermore, the complex has high nutritional value, derived from the components of the biological material that has been processed, and is therefore suitable for improving the nutrient content of soil (often referred to as "fertilizing" soil). For example, if the biological material comprises protein then the resultant complex can deposit protein and/or amino acids into the soil. The structure of the complex ensures that such deposition is slow release (providing efficient nutrient provision whilst reducing the negative environmental impact of leaching). In addition, the process of the invention results in a degradable material that does not release substantial malodor, in contrast to untreated biological material (e.g. meat) that releases substantial malodor upon degradation.

A further characteristic of the polymer complex is that it has a pH of 7.7. This makes it suitable for use as a liming agent (i.e. to increase the pH of an acidic soil). However, the pH of the polymer complex could be adjusted after its formation to make it suitable for any intended use.

*Methods of preparing material for the method of the invention*

In preferred embodiments the biological material is processed before it is incorporated into the alkaline solution so as e.g. to increase its solubility. For example, the biological material might be comminuted, for example by cryogenic milling, grinding, crushing, slicing, or a mixture thereof (e.g. using a macerator). To aid such comminution the biological material is preferably frozen beforehand, preferably by cryogenic freezing (e.g. using liquid nitrogen). This step has the further advantage of reducing the degradation of and/or spread of pathogenic agents from the biological material prior to its incorporation into the water-retaining polymer complex.

Such embodiments are particularly envisaged for the agricultural setting, where fallen stock can be frozen and/or comminuted prior to processing (which may occur at the same locality). In particularly preferred embodiments biological material (e.g. fallen stock) is placed with a steel (preferably stainless) container lined (partly or fully) with cardboard and submerged (partially or totally) in liquid nitrogen. Once the liquid nitrogen has evaporated the frozen biological material can be comminuted via any conventional means (e.g. crushing - for which a roll packer may be particularly effective).

Examples

1. Production of a meat-based water-retaining polymer complex

100ml of a 30% alkaline solution was made up (5g KOH and 25g NaOH). Water temperature went up from 23°C to 60°C during this (exothermic) process. 100g of organic waste (minced meat) was dissolved in the solution, reducing the temperature of the solution to 55°C. The high temperature and high alkaline conditions of the solution can lead to 6 logs Total Viable Count reductions (see below). Once the temperature of the solution fell to 45°C, 30ml acrylic acid was added. This raised the temperature to 62°C. After 5 minutes, 0.5g ammonium persulphate (APS) was added as polymerizing agent to the solution and polymerization took place within 15 minutes. The addition of APS to the solution raised the temperature of the solution to 70°C. The resultant complex had a pH of 7.7.

2. Water Holding Capacity (WHC) of the meat-based water-retaining polymer complex

In order to measure the WHC of the end product, 20 g of dried polymer complex was saturated with purified, deionized water. The polymer was filtered using 25 cm Whatman filter paper (quantitative no. 6) in a funnel. The wet filter paper was weighed first and after 15 minutes once the water dropping had stopped, the polymer and filter paper were weighed again and the weight of a wet filter paper was subtracted. WHC could then be calculated as following:

Wet Filter paper = 0.3254 g
Wet Filtered paper + Saturated polymer = 529.1736 g
529.1736 g - 0.3254 = 528.8482 g saturated polymer mass
528.8482g -20g = 508.8482 g water in 20 g polymer
20 g polymer can hold - 508.8482g
Therefore 1g of polymer can hold 25.4 g of water

3. Rottability of the meat-based water-retaining polymer complex

2g of raw meat and 2g of polymer complex were placed in two separate petri dishes. 15ml of maximum recovery diluent was added to 1g of soil and shaken for 2 minutes to extract a wide range of soil micro-organisms. 5ml of this extract was added to each petri dish and incubated at 25°C for 5 hours. The petri dish containing raw meat emitted a bad odour while the polymer complex produced no undesirable smell.

4. Microbial eradication during the production process

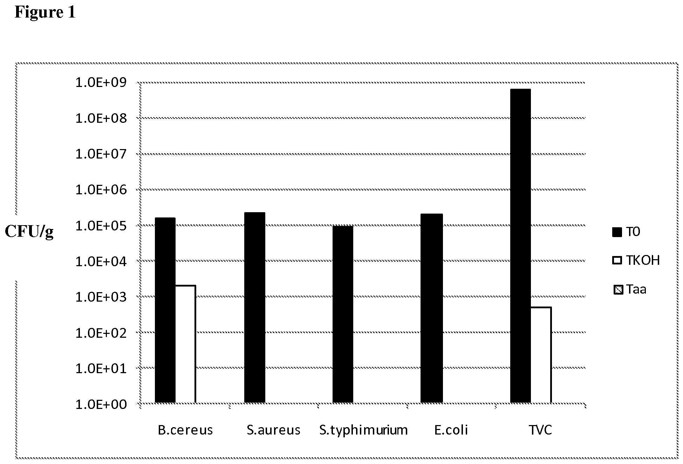

Four representative bacteria were used: *Bacillus cereus* (sporogenic, gram positive), *Staphylococcus aureus* (non-sporogenic, gram positive), and *Sallmonella typhimurium* and *Escherichia coli* (both non-sporogenic, gram negative). Each of the above mentioned bacteria was inoculated into 100g of organic waste (minced meat) and mixed thoroughly in 100ml distilled water with a magnetic stirrer. Samples were taken before (To) and after ($T_{KOH}$) addition of 25g of NaOH and 5g of KOH, and again after acrylic acid (before addition of polymerising agent) ($T_{aa}$). Four samples were taken at each sampling point and the most outlying sample disregarded.
Samples were analysed with selective, nutrient agar (37°C) for the individual bacteria and for total viable count (TVC). The selective agars used were B. *cereus* selective agar, Vogal-Johnson, XLD and violet red bile (all purchased from Oxoid, UK) to detect *B.cereus, S.aureus*, *S.typhimurium* and *E.coli,* respectively. The results are shown in Figure 1.
The addition of alkaline to the solution (with corresponding sharp increase in temperature) led to a significant reduction in microbial populations (5-6 logs). The gram negative bacteria (*E.coli* and S. *typhimurium*) were eradicated at that stage. Although *B.cereus* population has also dramatically decreased, it shows persistency at that stage. At the end of the process there is a total eradication of all microbial populations due to the addition of acrylic acid to the solution.

5. Energy release during the production process

To measure the energy release from the process, the following formula was used:

$$Q=MC\Delta T$$

Where Q is the quantity of heat released in joules or calories
M is the mass of the material being heated

C is specific heat capacity in J/ g°C or cal/g°C

ΔT is difference in temperature in °C or °F

100ml of water was added to 100g of minced meat. Temperature at that stage was 24°C. After addition of 30g KOH, temperature rose to 44°C.

Therefore, from the first stage 4600 calories are released.

$$Q_1=M_1C\Delta T \qquad Q_1=230g*1cal/g°C*(44-24) = 4600 \text{ calories}$$

When temperature dropped down to 40 °C, 30ml of acrylic acid was added. Temperature increased to 56 °C. Therefore, 4160 calories is released at that stage:

$$Q_2=M_2C\Delta T \qquad Q_2=260g*1cal/g°C*(56-40) = 4160 \text{ calories}$$

0.5 g of APS was added when temperature was 53°C. Temperature went up to 60°C as a result. Therefore, 1820 calories of energy is released at that stage:

$$Q_3=M_3C\Delta T \qquad Q_3=260g*1 \text{ cal}/g°C*(60-53) = 1820 \text{ calories}$$

$$Q_{total}= 4600+4160+1820= 10580 \text{ calories or } 10.6 \text{ Kcal}$$

Therefore 10.6 Kcal energy is released to produce 260 g of wet end product.

6. Evidence of cross-linking between meat and polyacrylate

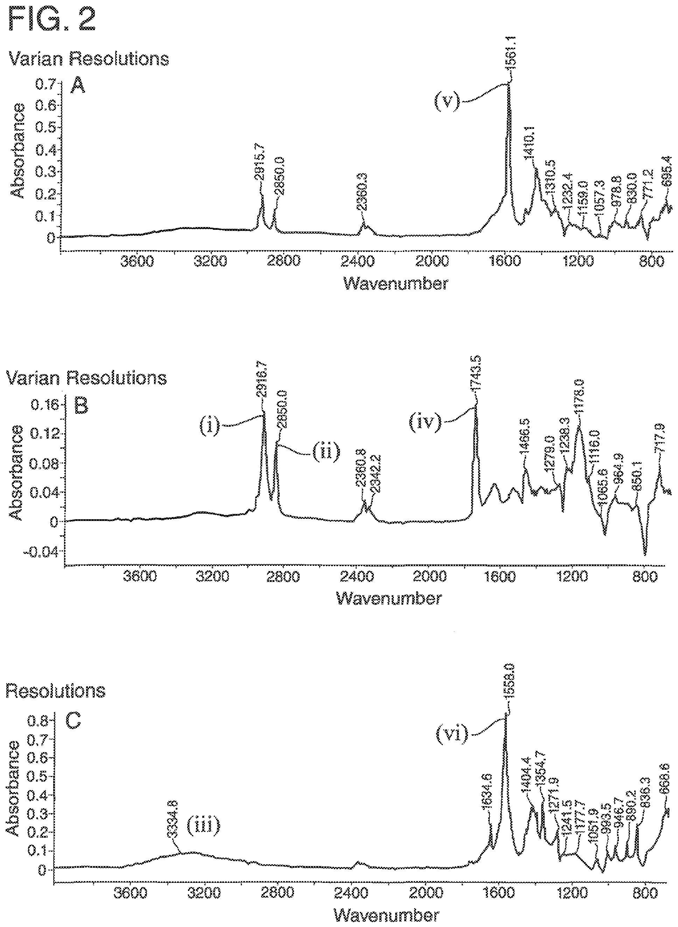

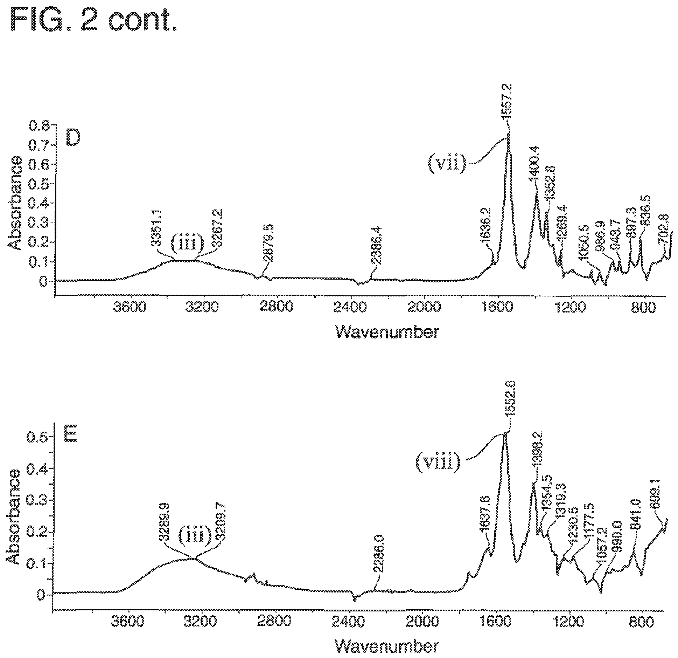

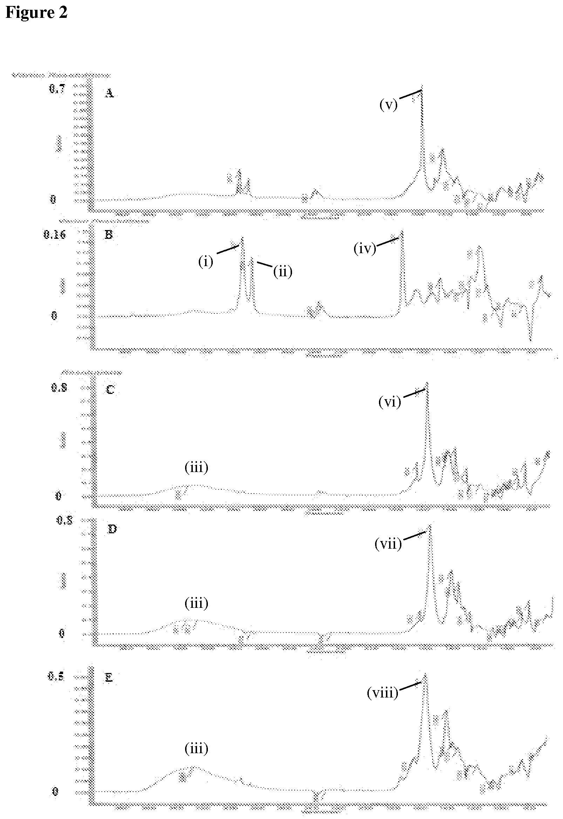

Figure 2 shows IR spectra (absorbance versus wavelength) for A) hydroxylated meat, B) raw meat, C) hydroxylated meat combined with acrylic acid (without ammonium persulfate addition), D) poly sodium (potassium) acrylate and E) the meat-based water-retaining polymer complex as prepared above (i.e. hydroxylated meat combined with acrylic acid and polymerised with ammonium persulfate).

Absorbance at 2916.7 cm$^{-1}$ and 2850.8 cm$^{-1}$ in raw meat (see (i) and (ii)) corresponds to the peptide -NH group. These peaks disappear following hydroxylation. This is expected as -NH groups are replaced by -OH due to hydroxylation.

Addition of acrylic acid to the hydroxylated meat increases it is water retaining capacity, as shown by C to E. Despite keeping the samples at 30°C for a week to keep them dry (following an initial overnight drying step at 70°C), samples containing acrylic acid had absorbed the low level of moisture in the oven and water retention is shown by the peak at 3267-3251 cm$^{-1}$ (see (iii)) which correspond to the water -OH group.

Absorbance for the peptide C=O group appears at 1743.5 cm$^{-1}$ in raw meat (see (iv)). However, when this group is hydroxylated the peak shifts to 1561.1 cm$^{-1}$ (see (v)). When acrylic acid is added to the hydroxylated meat the absorbance peak shifts again, to 1558.0 cm$^{-1}$ (see (vi)). Only one peak is seen for the peptide C=O group in hydroxylated meat with and without acrylic acid that is similar to the absorbance seen in poly sodium (potassium) acrylate at 1557.7 cm$^{-1}$ for its ester C=O group (see (vii)). The absorbances at (v) to (vii) all have similar intensity, of 0.7-0.8. However, once ammonium persulfate is added as polymerising agent, C=O absorbance and its intensity decreases dramatically to 1552.8 cm$^{-1}$ and 0.5, respectively (see viii)). This is strong evidence of cross linkage between meat particles and polyacrylate as the absorbance and its intensity for the C=O group is unique. If there were only reactions between acrylate monomers without meat particles being chemically involved, then C=O absorbance and intensity would have been similar to poly sodium (potassium) acrylate and hydroxylated meat with acrylic acid.

**Claims**

**1.** A method of processing biological material comprising dead animal or human proteinaceous material into a water-retaining polymer complex, said method comprising the steps of:

(a) providing a composition comprising said biological material, an alkaline solution and a monomer that polymerises to form a water-retaining polymer; and

(b) adding a polymerisation agent to form a water-retaining polymer complex in which said animal or human proteinaceous material is chemically cross-linked to said water-retaining polymer;

wherein the ratio of biological material to other components is between 1:100 and 5:1 (w/v); and said monomer is alkene-based, such as acrylic acid, acrylamide or vinyl alcohol.

2. A method according to Claim 1 wherein said biological material comprises household waste derived from meat, vegetables and fruit.

3. A method according to Claim 2 wherein the ratio of biological material to other components is between 1:2 and 2:1 (w/v).

4. A method according to any one of the preceding claims wherein said composition further comprises a further nutrient.

5. A method according to any one of the preceding claims wherein said composition further comprises an animal repellent.

6. A method according to any one of the preceding claims further comprising the step of comminuting said biological material prior to step (a).

7. A method according to claim 6 further comprising the step of freezing said biological material prior to said comminuting step.

8. A method according to claim 7 wherein said freezing is effected using cryogenic freezing.

9. A method according to any previous claim wherein said composition further comprises comminuted disposable diaper.

10. A method according to claim 9 wherein said diaper is soiled.

11. A water-retaining polymer complex obtained from the method according to any one of claims 1 to 10.

12. Use of a water-retaining polymer complex according to claim 11 to improve the water retention and/or nutrient content of soil.

**Patentansprüche**

1. Verarbeitungsverfahren für biologisches Material, das totes tierisches oder menschliches proteinhaltiges Material umfasst, zu einem wasserspeichernden Polymerkomplex, wobei das Verfahren die folgenden Schritte umfasst:

(a) Bereitstellen einer Zusammensetzung, die das biologische Material, eine alkalische Lösung und ein Monomer umfasst, das polymerisiert, um ein wasserspeicherndes Polymer zu bilden; und
(b) Zugabe eines Polymerisierungsmittels zur Bildung eines wasserspeichernden Polymerkomplexes, in dem das tierische oder menschliche proteinhaltige Material chemisch mit dem wasserspeichernden Polymer vernetzt ist;

wobei das Verhältnis von biologischem Material zu anderen Komponenten zwischen 1:100 und 5:1 (w/v) liegt; und das Monomer auf Alkenbasis, wie Acrylsäure, Acrylamid oder Vinylalkohol, vorliegt.

2. Verfahren nach Anspruch 1, bei dem das biologische Material Haushaltsabfälle aus Fleisch, Gemüse und Obst umfasst.

3. Verfahren nach Anspruch 2, wobei das Verhältnis von biologischem Material zu anderen Komponenten zwischen 1:2 und 2:1 (w/v) liegt.

4. Verfahren nach einem beliebigen der vorstehenden Ansprüche, wobei die Zusammensetzung ferner einen weiteren Nährstoff umfasst.

**5.** Verfahren nach einem beliebigen der vorstehenden Ansprüche, wobei die Zusammensetzung ferner ein Tierabwehrmittel umfasst.

**6.** Verfahren nach einem beliebigen der vorstehenden Ansprüche, das ferner den Schritt des Zerkleinerns des biologischen Materials vor Schritt (a) umfasst.

**7.** Verfahren nach Anspruch 6, das ferner den Schritt des Einfrierens des biologischen Materials vor dem Zerkleinerungsschritt umfasst.

**8.** Verfahren nach Anspruch 7, wobei das Einfrieren unter Einsatz des kryogenen Tiefgefrierens erfolgt.

**9.** Verfahren nach einem beliebigen der vorstehenden Ansprüche, wobei die Zusammensetzung ferner zerkleinerte Wegwerfwindeln umfasst.

**10.** Verfahren nach Anspruch 9, wobei die Windel verschmutzt ist.

**11.** Wasserspeichernder Polymerkomplex, der mit dem Verfahren nach einem beliebigen der vorstehenden Ansprüche 1 bis 10 erzielt wurde.

**12.** Verwendung eines wasserspeichernden Polymerkomplexes nach Anspruch 11, um die Wasserspeicherung und/oder den Nährstoffgehalt des Bodens zu verbessern.

**Revendications**

**1.** Procédé de transformation d'un matériau biologique comprenant des matières protéiques d'humain ou d'animal mort en un complexe de polymère retenant l'eau, ledit procédé comprenant les étapes suivantes :

(a) obtention d'une composition comprenant ledit matériau biologique, une solution alcaline et un monomère qui polymérise pour former un polymère retenant l'eau ; et
(b) addition d'un agent de polymérisation pour former un complexe de polymère retenant l'eau dans lequel lesdites matières protéiques d'humain ou d'animal sont chimiquement réticulées audit polymère retenant l'eau ;

dans lequel le rapport du matériau biologique aux autres composants est compris entre 1/100 et 5/1 (poids/volume) ; et ledit monomère est à base d'alcène, tel que l'acide acrylique, l'acrylamide ou l'alcool vinylique.

**2.** Procédé selon la revendication 1, dans lequel ledit matériau biologique comprend des déchets domestiques dérivés de viandes, de légumes et de fruits.

**3.** Procédé selon la revendication 2, dans lequel le rapport du matériau biologique aux autres composants est compris entre 1/2 et 2/1 (poids/volume).

**4.** Procédé selon l'une quelconque des revendications précédentes, dans lequel ladite composition comprend en outre un autre nutriment.

**5.** Procédé selon l'une quelconque des revendications précédentes, dans lequel ladite composition comprend en outre un répulsif pour animaux.

**6.** Procédé selon l'une quelconque des revendications précédentes, comprenant en outre une étape de broyage fin dudit matériau biologique avant l'étape (a).

**7.** Procédé selon la revendication 6, comprenant en outre une étape de congélation dudit matériau biologique avant ladite étape de broyage fin.

**8.** Procédé selon la revendication 7, dans lequel ladite congélation est effectuée par surgélation cryogénique.

**9.** Procédé selon l'une quelconque des revendications précédentes, dans lequel ladite composition comprend en outre des couches jetables broyées finement.

10. Procédé selon la revendication 9, dans lequel lesdites couches jetables sont souillées.

11. Complexe de polymère retenant l'eau obtenu à partir du procédé selon l'une quelconque des revendications 1 à 10.

12. Utilisation d'un complexe de polymère retenant l'eau selon la revendication 11 pour améliorer la rétention d'eau et/ou la teneur en nutriments d'un sol.

**Figure 1**

## FIG. 2

## FIG. 2 cont.

**Figure 2**

**EP 2 640 679 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10123255 A1
- US 4201564 A
- WO 2009059775 A2